# FASCICULE DE BREVET EUROPEEN

(11) **EP 1 290 356 B1**
(45) Date de publication et mention de la délivrance du brevet: **26.10.2005**
(21) Numéro de dépôt: 01909935.7
(22) Date de dépôt: 01.03.2001
(51) Int. Cl.: F16F 9/46, F16F 9/348

(54) **CLAPET DE LAMINAGE A RAIDEUR REGLABLE ET AMORTISSEUR ASSOCIE**
VENTIL MIT BLATTFEDER, DEREN STEIFIGKEIT EINSTELLBAR IST UND ZUGEHÖRIGER DÄMPFER
THROTTLING VALVE WITH ADJUSTABLE STIFFNESS AND ASSOCIATED SHOCK ABSORBER

(30) Priorité: 03.03.2000 FR 0002734
(43) Date de publication de la demande: 12.03.2003
(73) Titulaire: Delcamp Energie, 30700 Baron (FR)
(72) Inventeur: DELCAMP, Eric, F-30700 Baron (FR)
(74) Mandataire: Gasquet, Denis
(86) Numéro de dépôt international: PCT/FR2001/000598
(87) Numéro de publication internationale: WO 2001/065140

(56) Documents cités:
- DE-A- 3 631 714
- DE-B- 1 200 624
- FR-A- 2 576 996
- GB-A- 2 332 727
- US-A- 5 649 611

## Description

La présente invention concerne un clapet de laminage et un amortisseur associé dont le système de laminage utilise ce clapet. Elle concerne plus particulièrement les moyens de réglage susceptibles de modifier la raideur du clapet de laminage.

Les systèmes qui organisent le débit de fluide et le laminage dans les amortisseurs sont généralement constitués, pour chaque sens de déplacement, d'un empilage de clapets en forme de disques obturant des orifices et d'un petit trou de passage fixe agissant dans les deux sens de déplacement. Ce type d'amortisseur nécessite le démontage du piston et le changement des clapets lorsque l'on souhaite modifier les paramètres d'amortissement.

Certains systèmes de réglages de l'art antérieur agissent par modification de la section de l'orifice de passage fixe mais l'efficacité d'une telle solution est médiocre car elle n'agit que sur les faibles vitesses de déplacement et n'a pratiquement aucun effet sur les vitesses moyennes et élevées parce que les sections de passage sont disproportionnées entre l'orifice de passage fixe et les orifices ouverts par les clapets lors d'une augmentation de la pression du fluide d'amortissement.

D'autres systèmes agissent par précharge de ressorts longitudinaux sur les clapets d'amortisseur mais dans ce cas, les caractéristiques d'amortissement ne sont modifiées qu'au niveau du seuil d'ouverture des clapets, ce qui produit un affaissement brutal, en général non souhaité, de la suspension lorsque sa vitesse d'enfoncement atteint ce fameux seuil.

Bien entendu, ces phénomènes affectent plus généralement le mouvement d'enfoncement d'une suspension même si, avec des caractéristiques différentes, le mouvement d'extension est également concerné.

On connaît notamment les documents FR 2576996, DE 1817392, GB 1150394 qui divulguent des dispositifs de réglage, toutefois ceux-ci présentent de nombreux inconvénients : la butée de clapet gonflable est fragile et peu fiable, la butée de clapet en caoutchouc se ramollit en chauffant, et les brides en forme de lame de ressort ont un débattement trop faible. D'autre part tous ces systèmes ont en général une certaine souplesse qui interfère avec la raideur des clapets.

Le document DE-A-12 00 624 divulgue un clapet selon le préambule de la revendication 1.

Ainsi, le clapet de l'invention a pour objectif de résoudre les inconvénients précités à l'aide de moyens simples, fiables, peu onéreux et faciles à mettre en oeuvre. Il permet ainsi de régler la force de l'amortissement grâce à des moyens de réglage particuliers.

Le clapet d'amortisseur de l'invention est défini par les caractéristiques de la revendication 1.

Selon un mode de réalisation préféré du clapet d'amortisseur de l'invention, l'organe de réglage est un ressort de type métallique.

Selon ce mode de réalisation du clapet d'amortisseur, il comporte un axe qui porte l'embase, la rondelle, l'organe de réglage et l'organe de commande.

Selon une autre caractéristique du clapet d'amortisseur de l'invention, celui-ci est caractérisé en ce que l'organe de commande présente une rampe destinée à se déplacer relativement par rapport à l'embase le long de l'axe pour solliciter l'organe de réglage élastique et provoquer sa déformation .

Selon une caractéristique complémentaire du clapet d'amortisseur, la déformation de l'organe de réglage élastique permet de faire varier la distance entre l'orifice de circulation et la zone d'appui de l'organe sur la rondelle.

Par ailleurs, l'invention concerne aussi un amortisseur comportant un clapet, ledit amortisseur étant caractérisé en ce qu'il comprend un système de laminage muni d'au moins un clapet d'amortisseur selon l'invention.

Selon une variante d'exécution de l'amortisseur, le clapet d'amortisseur est disposé directement sur le piston de l'amortisseur qui joue le rôle de l'embase du clapet de l'invention.

Selon une autre variante d'exécution de l'amortisseur, le clapet d'amortisseur est disposé dans un système de laminage situé à l'extérieur du corps d'amortisseur ou contre le corps sur un circuit hydraulique reliant les chambres de travail.

D'autres caractéristiques et avantages de l'invention se dégageront de la description qui va suivre en regard des dessins annexés qui ne sont donnés qu'à titre d'exemples non limitatifs.

Les figures 1 à 7 illustrent le clapet de l'invention et des systèmes de laminage d'amortisseur utilisant le clapet de l'invention.
La figure 1 illustre en coupe transversale le clapet à raideur réglable en position de raideur minimum (A).
La figure 2 illustre selon une vue similaire à la figure 1, le clapet en position de raideur maximale (B).
La figure 3 représente un diagramme effort-vitesse schématique comparant les caractéristiques de deux courbes obtenues par la variation de raideur du clapet.
La figure 4 illustre en coupe transversale un système de laminage d'un piston d'amortisseur sur lequel l'organe de commande et l'organe de réglage sont représentés en demi vue à gauche en position de raideur minimale et en demi vue à droite en position de raideur maximale.
La figure 5 illustre en coupe transversale une première variante d'exécution d'un système de laminage d'amortisseur.
La figure 6 représente schématiquement un diagramme effort-vitesse décrivant différents réglages de la première variante d'exécution illustrée figure 5.
La figure 7 illustre schématiquement une deuxième variante d'exécution d'un système de laminage.

Selon l'invention, le clapet portant la référence générale (1) est du type formé d'au moins une rondelle élastique (11) destinée à obturer au moins un orifice (4) de circulation du fluide d'amortissement (5). Il comporte des moyens de réglage de la raideur du clapet, c'est à dire des moyens susceptibles de régler la force résistante développée par la ou les rondelle(s) (11) à l'encontre de l'écoulement du fluide (5) qui s'effectue par le ou les orifice(s) de circulation (4).

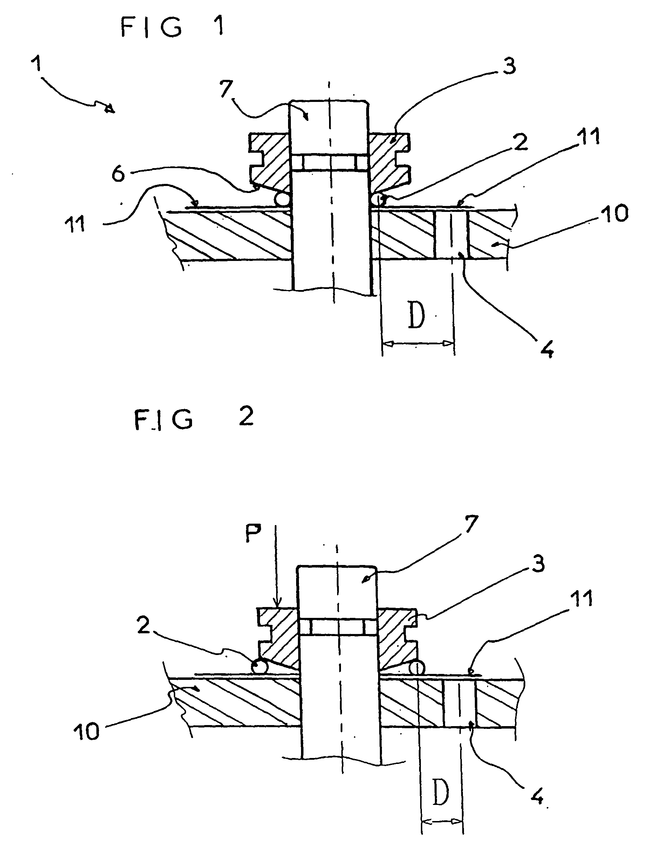

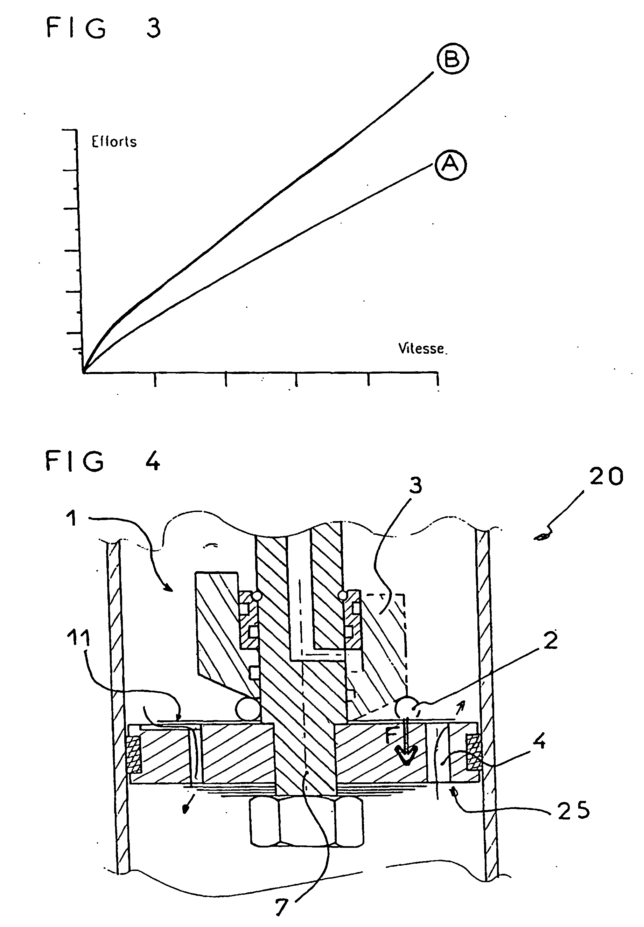

Les moyens de réglage de la raideur du clapet (1) comprennent avantageusement un organe de réglage élastique (2) disposé en appui contre la rondelle (11) et susceptible de se déformer longitudinalement sous l'action d'une sollicitation d'un organe de commande (3) des moyens de réglage, le dit organe (2) étant susceptible également de transmettre un effort transversal (F) à la rondelle (11) sans se déformer. La déformation longitudinale de l'organe de réglage (2) permet le déplacement du point d'appui de l'organe (2) sur la rondelle (11) et donc le réglage de la distance (D) entre l'orifice de circulation (4) et le dit point d'appui comme le montrent les figures 1 et 2 par exemple, tandis que la transmission de l'effort transversal par l'organe élastique permet de conserver la force de l'appui sur la rondelle malgré le déplacement de la zone d'appui. Ainsi les moyens de réglage permettent de faire varier le couple résistant opposé par la rondelle élastique (11) à l'encontre de l'écoulement du fluide (5) en faisant varier la position de la zone d'appui de l'organe de réglage élastique (2) sur la rondelle (11) par rapport à la position de l'orifice de circulation du fluide (4).

Selon le mode de réalisation préféré du clapet (1) de l'invention, l'organe de réglage élastique (2) est constitué d'un ressort torique qui peut-être formé par un ressort hélicoïdal dont les extrémités se rejoignent et sont aptes à être rendues solidaires, comme par exemple vissées l'une dans l'autre. Ce ressort forme donc un tore ayant la faculté d'être extensible longitudinalement selon l'axe du ressort tout en résistant à l'écrasement transversalement en conservant sa forme de tore. Notons que la déformation longitudinale du ressort hélicoïdal, c'est à dire son allongement, correspond globalement à une déformation radiale de cet organe élastique puisque le ressort possède une forme de tore. Ce ressort torique (2) est disposé à plat et concentriquement sur un ou plusieurs clapets élastiques en forme de rondelle (11) qui obturent au moins un orifice (4) de circulation du fluide d'amortissement (5). Sur ce ressort torique est plaquée à son tour une pièce (3) comportant une rampe tel qu'une face sensiblement tronconique (6), la dite face tronconique étant en contact avec le ressort torique (2) et l'angle du tronc de cône étant suffisamment incliné pour permettre le glissement et l'expansion du ressort torique lorsqu'une pression suffisante est exercée sur l'ensemble. Un axe (7) permet de positionner les rondelles (11) sur la pièce (10) ou embase comportant les orifices de passage (4) du fluide (5), il participe au guidage de l'ensemble et traverse les rondelles (11), le tore (2) et la pièce tronconique (3).

Ainsi, en fonctionnement, lorsque l'on applique une pression suffisante (P) sur la pièce tronconique pour provoquer son déplacement relatif par rapport à la pièce (10) ou embase du clapet tel qu'illustré figure 2, celle-ci force le ressort torique (2) à se déformer longitudinalement et donc à s'agrandir radialement pour occuper sur la rondelle (11) un diamètre plus grand. La distance (D) entre l'axe des orifices de passage (4) du fluide et la ligne de contact du tore sur le clapet, s'en trouve réduite entraînant ainsi la réduction du bras de levier exercé par la force du flux hydraulique circulant par les orifices (4) par rapport au nouveau point d'appui du clapet. La pression de fluide nécessaire au fléchissement du clapet doit donc augmenter et cela pour chaque vitesse d'écoulement du fluide.

Ainsi, selon le mode de réalisation préféré le clapet (1) de l'invention est constitué d'une embase (10) portant un axe (7) sur lequel sont montés la ou les rondelles élastiques (11), l'organe de réglage (2) ou ressort torique et l'organe de commande (3). L'inclinaison de la génératrice de la portion tronconique (6) de l'organe de commande (3) par rapport au plan horizontal de la rondelle est avantageusement compris entre 10° et 45° et de préférence entre 20 et 35°.

La figure 3 représente un diagramme effort vitesse montrant deux courbes d'amortissement correspondant aux positions A et B du clapet illustrées figures 1 et 2 et montrant la modification de la raideur du clapet. On constate que l'augmentation de la force de résistance au mouvement de l'amortisseur varie relativement proportionnellement avec la vitesse de déplacement relatif des deux ensembles mobiles de l'amortisseur.

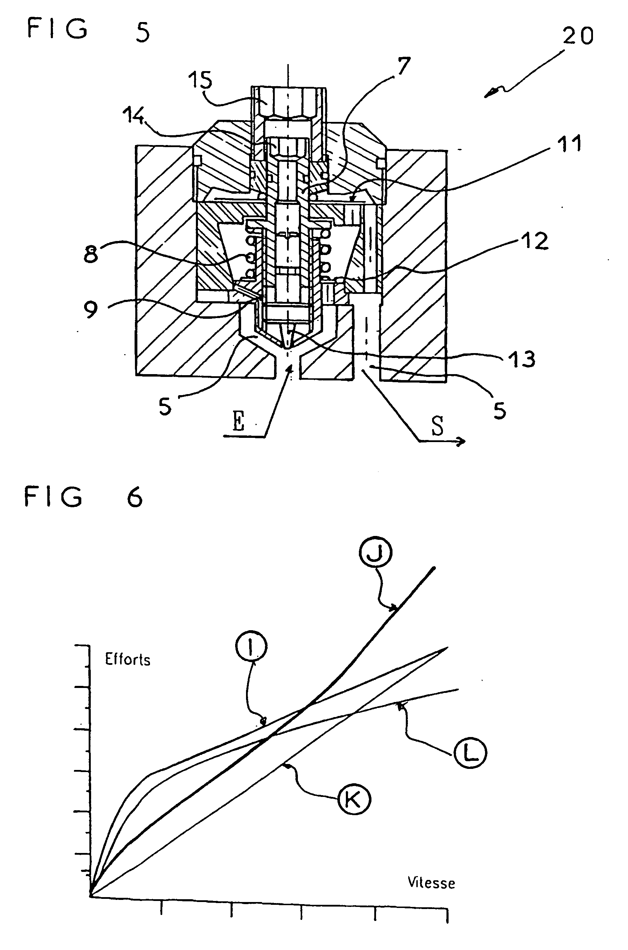

Ainsi, ce clapet (1) peut-être utilisé dans différents types de montage ou d'assemblage et peut-être disposé directement sur le piston (25) d'un amortisseur classique comme le montre la figure 4. Il peut également être utilisé dans des systèmes de laminage disposés à l'extérieur du corps d'amortisseur comme par exemple dans la forme de réalisation selon la figure 5, le clapet à raideur réglable (1) est monté en série avec un clapet de précharge (12) dont un by-pass (9) dévie en fonction du réglage de la vis (13) un certain débit de fluide d'amortissement (5). La vis (14) permet de déterminer le réglage de précharge du clapet (12) par l'intermédiaire d'un ressort (8) tandis que la vis (15) permet de déterminer le réglage de raideur du clapet (11) en déplaçant l'organe de commande (3) contre l'organe de réglage (2). Bien entendu, la perte de charge provoquée par les deux clapets (11) et (12) montés en série s'additionne et une combinaison entre les deux réglages permet de moduler et de modifier seulement les paramètres des basses vitesses ou seulement les paramètres des grandes vitesses de mouvement de suspension.

La figure 6 représente un diagramme effort vitesse montrant différentes courbes d'amortissement obtenues par la modification de la raideur du clapet (1) ou de la précharge du clapet (12).

La courbe (I) est caractérisée par une augmentation de la précharge du clapet (12).

La courbe (J) est caractérisée par une augmentation de la raideur du clapet (11).

La courbe (K) est caractérisée par une augmentation de la raideur du clapet (11) et une réduction de la précharge du clapet (12).

La courbe (L) est caractérisée par une réduction de la raideur du clapet (11) et une augmentation de la précharge du clapet (12).

Selon le mode de réalisation préféré de l'invention, l'organe de commande (3) des moyens de réglage est une pièce comportant une partie tronconique que l'on déplace en translation. Toutefois il pourrait en être autrement et le ressort torique (2) pourrait ne plus être sollicité par une portion tronconique (6) mais par le déplacement d'une bille ou d'un organe dont l'extrémité est hémisphérique par exemple sans pour autant sortir du champ de protection de l'invention. L'organe de réglage est formé avantageusement par un ressort de type métallique car cela permet de modifier son positionnement sur la rondelle (11) grâce à sa déformation par allongement longitudinal tout en maintenant l'appui sur ladite rondelle, et tout en conservant sa forme torique de par sa résistance à l'écrasement dans le plan transversal. On peut d'ailleurs noter que l'utilisation du ressort (2) permet d'obtenir également son retour vers sa position initiale de manière automatique lorsque l'on déplace l'organe de commande pour réduire la sollicitation qu'il exerce sur le ressort.

Il va de soi que la forme et le nombre des orifices de circulation (4) du clapet (1) pourraient être différents sans pour autant sortir du champ de protection de l'invention. De même pour la ou les rondelles (11) dont le nombre, le diamètre, la forme et la matière peuvent être diverses.

Selon les différents modes de réalisation de systèmes de laminage d'amortisseurs illustrés dans lesquels le clapet (1) de l'invention est utilisé, celui-ci comporte une vis de réglage (15) destinée à gérer le déplacement relatif de l'organe de commande (3) et de l'embase (10) pour modifier la sollicitation qui s'exerce sur le ressort torique (2).

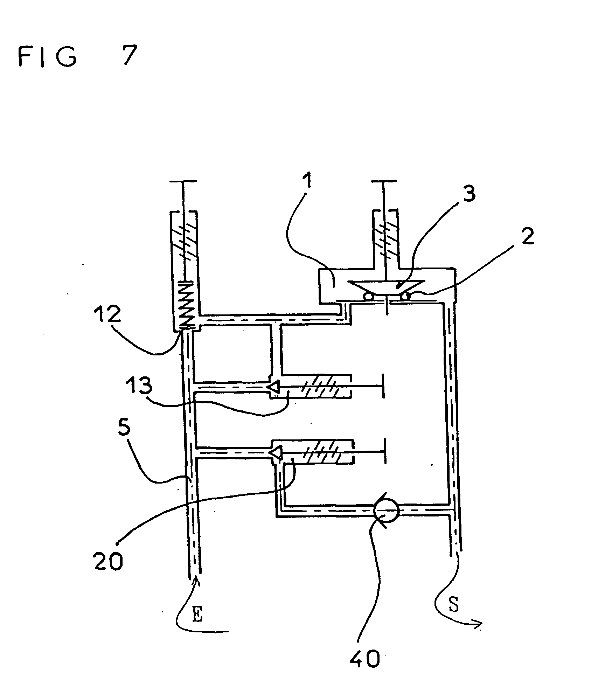

En référence au schéma de la figure 7, le dispositif est constitué du mode de réalisation précédent illustré figure 5 complété d'un réglage des mouvements lents d'amortisseur. Il est constitué d'une combinaison de deux réglages des mouvements lents (13) et (20) dont les effets se prolongent à plus ou moins grande vitesse de mouvement d'amortisseur. Un premier réglage de section d'orifice (20) est monté en série avec un clapet libre (40) pour une conséquence simple effet du réglage (20), les dits réglages (20) et clapets (40) étant montés en parallèle avec le système de laminage principal (1, 12, 13), un second réglage de section d'orifice (13) étant monté en parallèle avec le clapet de précharge (12) et en série avec le clapet de raideur (1).

En fonctionnement, le fluide entre par le conduit (E) en communication avec une des chambres de travail de l'amortisseur, le premier réglage (20) laisse libre le passage du fluide d'amortissement dans la mesure des capacités de débit de celui-ci. Le second réglage (13) permet d'atténuer les conséquences d'une précharge du clapet (12). La situation en série avec le clapet de raideur (1) limite aux faibles vitesses l'effet du réglage (13) qui reste influencé par la raideur du clapet (1). Le fluide d'amortissement rejoint l'autre chambre de travail par le conduit (S). Il est à noter que compte tenu des clapets (1) et (40) les réglages (13) et (20) du dispositif n'opèrent que dans un sens de fonctionnement. Il va de soi que les éléments montés en série peuvent être montés en amont ou en aval les uns par rapport aux autres sans sortir du champ de protection de l'invention et que ces réglages débouchant sur une activité simple effet, l'amortisseur devra disposer d'un système équivalent ou non pour permettre à l'huile de circuler dans l'autre sens.

Il va de soi que l'invention concerne tous les amortisseurs dont le système de laminage utilise un clapet (1) du type de l'invention. Ainsi, le dispositif ou clapet de raideur de l'invention peut être utilisé dans un grand nombre de modes de réalisation particuliers comme par exemple ceux cités brièvement ci-après:
- Le dispositif peut être monté en parallèle avec un circuit comportant un orifice dont la section peut être réglable et dont le franchissement peut être à sens unique grâce à un clapet.
- Le dispositif peut être monté en série avec un autre clapet dont la précharge peut être réglable pour permettre à la suspension de ne fonctionner qu'à partir d'un certain seuil d'effort (figure 5 et figure 7).
- Le clapet de précharge peut être monté en parallèle avec un orifice dont la section peut être réglable.
- Le dispositif peut être asservi et actionné automatiquement.
- Les systèmes cités ci-dessus peuvent être montés pour chaque sens de déplacement d'un amortisseur.

Les dispositifs décrits peuvent être installés entre deux chambres de travail sur tout type d'amortisseur, quel que soit l'emplacement du système de laminage, celui-ci pouvant être disposé sur un piston d'amortisseur, dans une unité de contrôle distante ou faisant corps avec l'amortisseur ou dans toute autre partie de celui-ci. Il peut être manoeuvré manuellement ou automatiquement, asservi à des capteurs de position et de charge statique et dynamique par tous les moyens connus, mécaniques, hydrauliques ou électriques. Il est entendu que ce système de laminage peu être adapté aussi bien au mouvement de compression qu'à celui d'extension. Le clapet selon l'invention est particulièrement destiné à l'ajustement des caractéristiques des amortisseurs, toutefois, il pourrait être utilisé dans d'autres applications, vérins, butées ou autre sans pour autant sortir du champ de protection de l'invention.

Selon une caractéristique complémentaire du clapet d'amortisseur, les orifices (4) sont plus ou moins éloignés de l'axe de l'embase comme par exemple répartis en spirale. De cette façon, lorsque l'organe de réglage étend sa zone d'appui sur la rondelle élastique, les orifices les plus proches du centre de l'embase sont masqués ou étranglés davantage, réduisant ainsi la section de laminage des orifices, ou réduisant virtuellement le nombre d'orifices.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Clapet d'amortisseur (1) du type comportant au moins une rondelle (11) élastique destinée à obturer au moins un orifice de circulation (4) du fluide d'amortissement (5) situé dans une embase (10) du clapet (1) et des moyens de réglage de la raideur du clapet susceptibles de régler la force résistante développée par la rondelle (11) à l'encontre de l'écoulement du fluide (5) dans l'orifice (4), dans lequel les moyens de réglage comportent un organe de réglage élastique (2) disposé en appui contre la rondelle (11) et destiné à se déformer sous l'action d'un organe de commande (3) des moyens de réglage pour modifier le positionnement de sa zone d'appui sur la rondelle (11) **caractérisé en ce que** l'organe de réglage élastique (2) est constitué par un ressort torique ou par un ressort hélicoïdal dont les extrémités sont fixées l'une à l'autre pour former un anneau destiné à s'agrandir radialement sous l'action de l'organe de commande pour occuper sur la rondelle (11) un diamètre plus grand.

2. Clapet d'amortisseur (1) selon la revendication 1 **caractérisé en ce que** l'organe de réglage (2) est un ressort de type métallique.

3. Clapet d'amortisseur (1) selon la revendication 1 ou 2 **caractérisé en ce qu'**il comporte un axe (7) qui porte l'embase (10), la rondelle (11), l'organe de réglage (2) et l'organe de commande (3).

4. Clapet d'amortisseur (1) selon la revendication 3 **caractérisé en ce que** l'organe de commande (3) présente une rampe (6) destinée à se déplacer relativement par rapport à l'embase (10) le long de l'axe (7) pour solliciter l'organe de réglage élastique (2) et provoquer sa déformation.

5. Clapet d'amortisseur (1) selon l'une quelconque des revendications précédentes, **caractérisé en ce que** la déformation de l'organe de réglage élastique (2) permet de faire varier la distance (D) entre l'orifice de circulation (4) et la zone d'appui de l'organe (2) sur la rondelle (11).

6. Amortisseur (20) comportant un clapet (1), **caractérisé en ce qu'**il comprend un système de laminage muni d'au moins un clapet d'amortisseur (1) selon l'une quelconque des revendications précédentes.

7. Amortisseur (20) selon la revendication 6, **caractérisé en ce que** le clapet d'amortisseur (1) est disposé directement sur le piston (25) de l'amortisseur (20).

8. Amortisseur (20) selon la revendication 6, **caractérisé en ce que** le clapet d'amortisseur (1) est disposé dans un système de laminage situé à l'extérieur du corps d'amortisseur ou contre le corps sur un circuit hydraulique reliant les chambres de travail.

## Patentansprüche

1. Stoßdämpferventil (1) umfassend mindestens eine Federscheibe (11) zum Verschließen mindestens einer in einem Sockel (10) des Ventils (1) befindlichen Durchflussöffnung (4) für das Dämpfungsmedium (5) und Mittel zum Einstellen der Steifigkeit des Ventils, mit denen die von der Scheibe (11) entwickelte Widerstandskraft gegen das Strömen des Mediums (5) durch die Öffnung (4) einstellbar ist, in dem die Einstellmittel ein elastisches Verstellglied (2) umfassen, das an der Scheibe (11) in Anlage ist und unter der Einwirkung eines Steuerglieds (3) der Einstellmittel verformbar ist, um die Positionierung des Bereichs, mit dem er an der Scheibe (11) anliegt, zu verändern, **dadurch gekennzeichnet, dass** das elastische Verstellglied (2) von einer Ringfeder oder von einer Schreubenfeder gebildet ist, deren Enden aneinander befestigt sind, so dass ein Ring entsteht, der unter der Einwirkung des Steuergliedes radial ausdehnbar ist, so dass er auf der Federscheibe (11) einen größeren Durchmesser einnimmt.

2. Stoßdämpferventil (1) nach Anspruch 1, **dadurch gekennzeichnet, dass** das Verstellglied (2) eine Metallfeder ist.

3. Stoßdämpferventil (1) nach Anspruch 1 oder 2, **dadurch gekennzeichnet, dass** es eine Achse (7) aufweist, auf der der Sockel (10), die Scheibe (11), das Verstellglied (2) und das Steuerglied (3) gelagert sind.

4. Stoßdämpferventil (1) nach Anspruch 3, **dadurch gekennzeichnet, dass** das Steuerglied (3) eine Schräge (6) aufweist, die relativ zum Sockel (10) entlang der Achse (7) verfahrbar ist, um das elastische Verstellglied (2) zu beanspruchen und seine Verformung zu veranlassen.

5. Stoßdämpferventil (1) nach einem der vorangegangenen Ansprüche, **dadurch gekennzeichnet, dass** durch die Verformung des elastischen Verstellglieds (2) der Abstand (D) zwischen der Durchflussöffnung (4) und dem Anlagebereich des Gliedes (2) an der Federscheibe (11) verändert werden kann.

6. Stoßdämpfer (20) mit einem Ventil (1), **dadurch gekennzeichnet, dass** er eine mit mindestens einem Stoßdämpferventil (1) nach einem der vorangegangenen Ansprüche versehene Drosseleinrichtung umfasst.

7. Stoßdämpfer (20) nach Anspruch 6, **dadurch gekennzeichnet, dass** das Stoßdämpferventil (1) unmittelbar am Kolben (25) des Stoßdämpfers (20) angeordnet ist.

8. Stoßdämpfer (20) nach Anspruch 6, **dadurch gekennzeichnet, dass** das Stoßdämpferventil (1) in einer außerhalb des Stoßdämpferkörpers befindlichen Drosseleinrichtung oder in Anlage am Körper auf einem die Arbeitskammern verbindenden hydraulischen Kreis angeordnet ist.

## Claims

1. Shock absorber valve (1) of the type having at least one spring washer (11) designed to close at least one orifice (4) for the flow of damping fluid (5) situated in a baseplate (10) of the valve (1) and means for regulating the stiffness of the valve capable of regulating the resisting force developed by the washer (11) against the flow of fluid (5) through the orifice (4), wherein the regulating means comprises an elastic regulating device (2) positioned resting against the washer (11) and designed to deform under the action of a device (3) for controlling the regulating means so as to modify the position of its supporting zone on the washer (11), **characterized in that** the elastic regulating device (2) consists of a toric spring or of a helical spring of which the ends are attached to each other to form a ring designed to increase radially in size under the action of the control device so as to occupy a greater diameter on the washer (11).

2. Shock absorber valve (1) according to claim 1, **characterized in that** the regulating device (2) is a spring of the metallic type.

3. Shock absorber valve (1) according to claim 1 or 2, **characterized in that** it includes a pin (7) that carries the baseplate (10), the washer (11), the regulating device (2) and the control device (3).

4. Shock absorber valve (1) according to claim 3, **characterized in that** the control device (3) has an inclined plane (6) designed to move relative to the baseplate (10) along the pin (7) so as to stress the elastic regulating device (2) and to bring about its deformation.

5. Shock absorber valve (1) according to any one of the preceding claims, **characterized in that** deformation of the elastic regulating device (2) enables the distance (D) to be varied between the flow orifice (4) and the zone where the device (2) rests on the washer (11).

6. Shock absorber (20) including a valve (1), **characterized in that** it comprises a throttling system provided with at least one shock absorber valve (1) according to any one of the preceding claims.

7. Shock absorber (20) according to claim 6, **characterized in that** the shock absorber valve (1) is positioned directly on the piston (25) of the shock absorber (20).

8. Shock absorber (20) according to claim 6, **characterized in that** the shock absorber valve (1) is positioned in a throttling system situated outside the shock absorber body or against the body on an hydraulic circuit connecting the working chambers.
